# EUROPÄISCHE PATENTSCHRIFT

(11) **EP 0 599 302 B1**
(45) Veröffentlichungstag und Bekanntmachung des Hinweises auf die Patenterteilung: **19.02.1997**
(21) Anmeldenummer: 93118960.9
(22) Anmeldetag: 25.11.1993
(51) Int. Cl.: F16M 1/00

(54) **Gerüstständer**
Frame
Bâti

(30) Priorität: 26.11.1992 DE 4239641
(43) Veröffentlichungstag der Anmeldung: 01.06.1994
(73) Patentinhaber: SMS SCHLOEMANN-SIEMAG AKTIENGESELLSCHAFT, D-40237 Düsseldorf (DE)
(72) Erfinder: Benz, Willi, D-41472 Neuss (DE)
(74) Vertreter: Valentin, Ekkehard, Dipl.-Ing.

(56) Entgegenhaltungen:
- DE-A- 2 341 236
- DE-C- 852 533
- GB-A- 2 146 102
- US-A- 2 417 697
- US-A- 5 085 069

## Beschreibung

Die Erfindung betrifft einen Gerüstständer, der aus mit den Ständerholmen verdübelten Rahmentraversen besteht, insbesondere einer Richtmaschine für Bleche, Bänder und Profile mit versetzt zueinander angeordneten oberen und unteren Richtwalzen, die über ihre Länge mittels ihrerseits an Quertraversen abgestützten, in Walzenstühlen angeordneten Stützrollen abgestützt sind, wobei zumindest die obere Quertraverse zur Positionierung der Richtwalzen anstellbar ist.

Mehrteilige Gerüstständer, die aus Ständerholmen und zwischen diesen oben und unten eingesetzten Rahmentraversen bestehen, sind bspw. sowohl für Richtmaschinen als auch für Walzwerksanlagen aller Art und Pressen bekannt. Zwei einander gegenüberliegende, ein Gerüst bildende Gerüstständer sind über eine obere und eine untere Quertraverse miteinander verbunden. Bei bekannten Richtmaschinen sind die Querhäupter durch vier Anstellzylinder auf und ab anstellbar, um einerseits den Richtspalt an unterschiedliche Dicken des zu richtenden Gutes anpassen und andererseits die Relativlage der oberen und unteren, zueinander versetzten Richtwalzen quer zur Vorschubrichtung des Richtgutes beeinflussen zu können. Auch bei den Walzgerüsten sind Anstellvorrichtungen vorhanden, mit denen sich die Walzen entsprechend der jeweils zu walzenden Band- oder Blechdicke ein- oder nachstellen lassen.

Zum Verbinden der Ständerholme mit den Rahmentraversen ist es bekannt, Nuten vorzusehen und zur Verbindung Paßfedern einzusetzen. Um die beim Richten, Pressen oder Walzen auftretenden, erheblichen Kräfte aufnehmen zu können, ist allerdings mehr als eine Paßfederverbindung erforderlich. Denn bei lediglich einer Paßfedernut müßte diese sehr tief in die Ständerholme eingearbeitet werden, was eine außerordentliche Schwächung des Gerüstständers bedeutete. Es wurden deshalb mehrere Paßfederverbindungen angeordnet, wobei sich jedoch aufgrund der Mehrflächigkeit eine gleichmäßige Lastverteilung als außerordentlich problematisch herausgestellt hat, das heißt die auftretenden Kräfte lassen sich nicht über längere Strecken mit gleichtragenden Anteilen der einzelnen Paßfederverbindungen verteilen. Bedingt durch die Paßfedernuten und die darin eingesetzten Keile bzw. Paßfedern stellt sich außerdem eine sehr nachteilige Kerbwirkung ein.

Bei einem durch die GB-A-2 146 102 bekanntgewordenen Maschinenrahmen für beispielsweise Druckmaschinen werden bei der Montage die Wandteile des Maschinenrahmens nach Art von Dübeln durch Paßstifte und unterstützende Schraubbolzen miteinander verbunden. Allerdings bereitet auch diese Verbindung Probleme, wenn es darum geht, eine gleichmäßige Lastverteilung zu erzielen.

Der Erfindung liegt daher die Aufgabe zugrunde, einen gattungsgemäßen Gerüstständer, insbesondere einer Richtmaschine für Bleche und Bänder so auszugestalten, daß sich die genannten Nachteile vermeiden und eine gleichmäßige Lastverteilung über mit geringem Fertigungsaufwand herzustellende Ständerverbindungen erreichen läßt.

Diese Aufgabe wird erfindungsgemäß dadurch gelöst, daß die Rahmentraversen und die Ständerholme durch Hohlbolzen miteinander verdübelt sind. Mit der Erfindung lassen sich mehrere Vorteile gleichzeitig erreichen, nämlich die bei einer Bolzenverbindung wohl geringste Kerbwirkung ausschöpfen und gleichzeitig ausnutzen, daß die Hohlbolzen beim Auftreten von Last in eine ovale Querschnittsform zusammengedrückt werden und somit ausweichen können. Es läßt sich damit ein Verformungsweg erzielen, der dazu beiträgt, daß andere Stellen, nämlich die einzelnen Hohlbolzen, gleichmäßiger zum Tragen kommen. Wenn vorzugsweise in der Verbindungsfuge zwischen den Rahmentraversen und den Ständerholmen im Abstand übereinander mindestens zwei Hohlbolzen angeordnet und mit im Durchmesser unterschiedlich großen Innenbohrungen versehen sind, läßt sich das gleichmäßige Verteilen der Last auf alle Verbindungsstellen optimieren und so beeinflussen, daß die Tragfähigkeit bei allen Hohlbolzen gleich wird. Gleichwohl läßt sich durch entsprechende Wahl der Innenbohrungen der Hohlbolzen auch eine gleiche Lastverteilung auf die einzelnen Hohlbolzen erreichen, falls das vom Anforderungsprofil her erwünscht wird.

Nach einer vorteilhaften Ausgestaltung der Erfindung wird vorgeschlagen, daß bei drei übereinander angeordneten Hohlbolzen die Innenbohrung des sich im Bereich der größten Holmkraft befindenden Hohlbolzens am größten und die Innenbohrung des sich im Bereich der kleinsten Holmkraft befindenden Hohlbolzens am kleinsten ist. Aufgrund der somit abgestimmten Innenbohrungen läßt sich die gewünscht gute Kraftverteilung an den einzelnen Hohlbolzen unterstützen bzw. erzielen.

Es wird erfindungsgemäß vorgeschlagen, daß von der Seite her in die Ständerholme und die Quertraversen Schraubverbindungen eingebracht sind. Mit diesen schweren Schraub- bzw. Querverbindungen lassen sich die zwischen den Ständerholmen und den Rahmentraversen auftretenden Spreizkräfte aufnehmen. Zur Befestigung der Schraubverbindungen eignen sich bspw. hydraulische Spannvorrichtungen. Da die Hohlbolzenanordnungen mit den aufeinander abgestimmten Innenbohrungen eine gleichmäßige Kraftverteilung und somit gleichtragende Hohlbolzen ermöglicht, lassen sich alle Schrauben gleich groß dimensionieren, so daß überall gleiche Schraubkräfte vorliegen.

Ein Verfahren zur Herstellung der Dübellöcher in einem Gerüstständer sieht erfindungsgemäß ein gleichzeitiges Aufbohren der für die Hohlbolzen in den Ständerholmen und den Rahmentraversen benötigten Bohrungslöcher vor. Das gemeinsame Aufbohren der gegebenenfalls vorgefrästen Bohrungslöcher ermöglicht es, daß sich für die darin einzusetzenden Hohlbolzen eine exakt gleiche Teilung, d.h. gleiche Abstände der Hohlbolzen voneinander erreichen lassen.

Weitere Merkmale und Vorteile der Erfindung ergeben sich aus den Ansprüchen und der nachfolgenden Beschreibung, in der ein Ausführungsbeispiel des Gegenstandes der Erfindung im Zusammenhang mit einer Rollenrichtmaschine für Bleche und Bänder näher erläutert ist. Es zeigen:

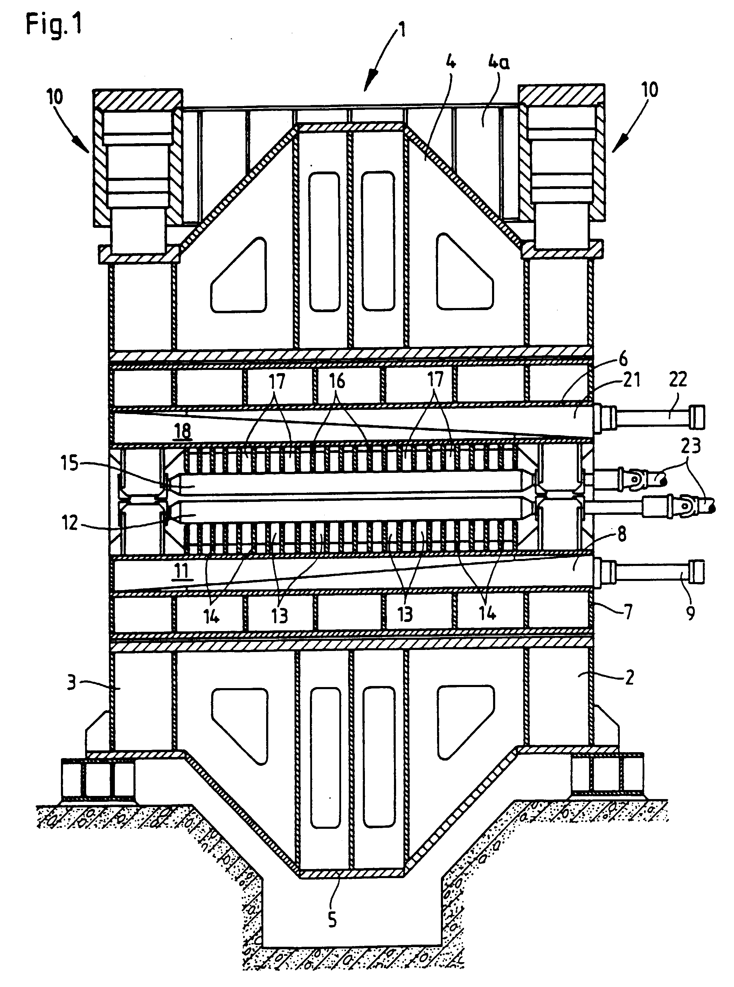

- Figur 1: einen Querschnitt einer Rollenrichtmaschine;
- Figur 2: eine perspektivische Ansicht eines Maschinenrahmens einer Rollenrichtmaschine mit erfindungsgemäßen Dübelverbindungen zwischen den Ständerholmen und den Rahmentraversen;
- Figur 3: eine Seitenansicht des Maschinenrahmens gemäß Figur 2, schematisch dargestellt; und
- Figur 4: in vergrößerter Darstellung die in Figur 3 strichpunktiert eingekreiste Einzelheit "X".

Die erfindungsgemäße Ständerverbindung wird anhand einer in den Zeichnungen dargestellten Rollenrichtmaschine 1 beschrieben. Bei der Rollenrichtmaschine 1 wird der Maschinenrahmen durch zwei am Fundament verankerte Ständer 2, 3 gebildet, die durch eine obere Rahmentraverse 4a - eine untere Rahmentraverse ist nicht dargestellt- sowie eine untere und obere Quertraverse 4, 5 starr verbunden sind. An der oberen Quertraverse 4 ist ein oberer Walzenstuhl 6 gehalten; ein unterer Walzenstuhl 7 ist verfahrbar auf der unteren Quertraverse 5 angeordnet. Die obere Quertraverse ist über Anstellzylinder 10 gegen die untere Quertraverse 5 anstellbar; jeweils ein- und auslaufseitig an den Ecken angeordnete und somit insgesamt vier Anstellzylinder 10 greifen an die obere Quertraverse 4 an.

Auf dem unteren Walzenstuhl 7 sind Rollenanstellkeile 8 gelagert, die durch je einen Druckmittelzylinder 9 verschiebbar sind. Auf jedem Anstellkeil 8 ist ein Lagerträgerkeil 11 für untere Richtrollen 12 und diesen zugeordneten Stützrollen 13 abgestützt; zwischen den Stützrollen 13 sind jeweils Stege 14 angeordnet. Weiterhin sind mehrere obere Richtrollen 15 an ihren Ballen abgestützt, und zwar mittels Stützrollen 17, die sich zwischen Stegen 16 befinden. Die oberen Richt- und Stützrollen 15, 17 sind an einem Lagerträgerkeil 18 gelagert. Jeder der benachbarten Lagerträgerkeile 18 ist an einen Anstellkeil 21 abgestützt, dessen andere Seite am oberen Walzenstuhl 6 anliegt. Die Anstellkeile 21 sind durch je einen Druckmittelzylinder 22 verschiebbar. Die oberen und unteren Richtrollen 5, 12 sind einzeln angetrieben und über Gelenkwellen 23 mit einem nicht dargestellten Antrieb verbunden.

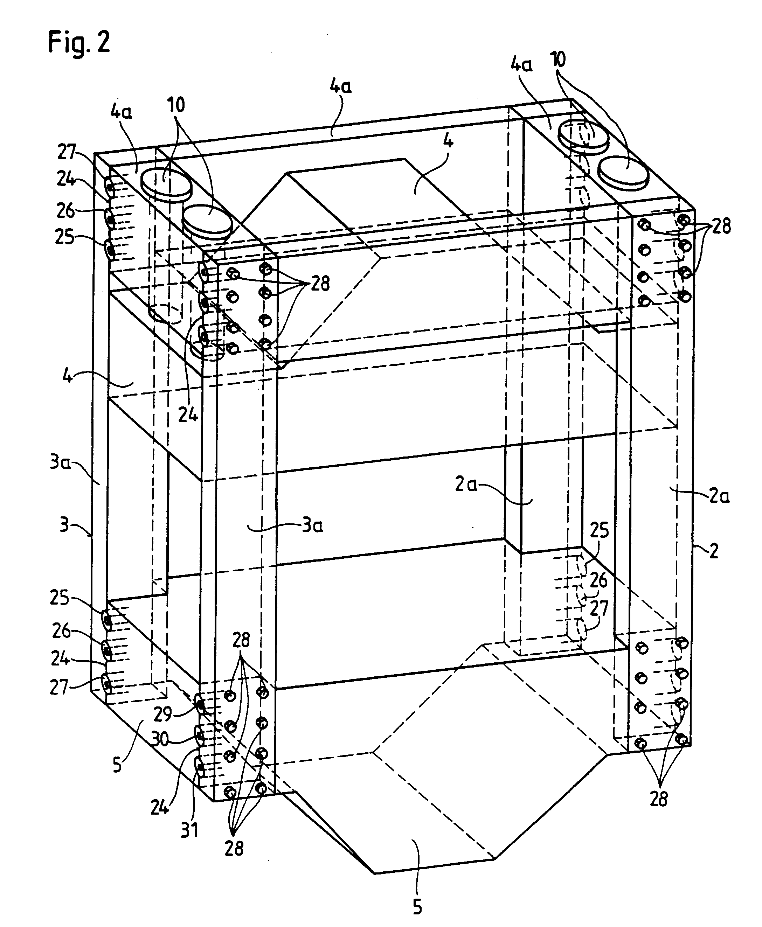

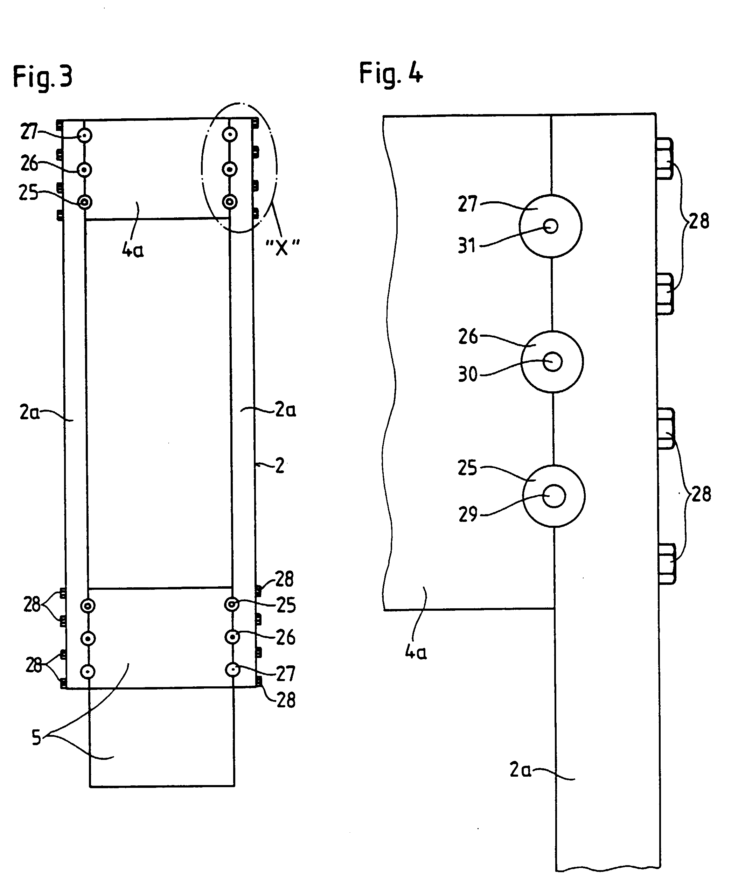

Wie in den Fig. 2 und 3 gezeigt ist, sind die Ständerholme 2a, 3a der Ständer 2, 3 des Maschinenrahmens durch jeweils drei im gleichen Abstand übereinander in die Verbindungsfuge 24 zwischen den Rahmentraversen 4a und 5, wobei die letztere, untere Rahmentraverse identisch mit der Quertraverse ist, eingesetzte Hohlbolzen 25, 26, 27 verbunden. Um die beim Betrieb auftretenden Spreizkräfte aufnehmen zu können, sind die Ständerholme 2a, 3a und die Rahmen- bzw. Quertraverse 4a, 5 außerdem durch von den außen liegenden Seiten der Ständerholme 2a, 3a eingeschraubte Schrauben 28 miteinander verbunden.

Wie sich näher aus Fig. 4 ergibt, sind die Hohlbolzen 25 bis 27 mit im Durchmesser unterschiedlichen, aufeinander abgestimmten Innenbohrungen 29 bis 31 versehen, und zwar weist der im Bereich der größten Holmkraft angeordnete Hohlbolzen 25 die Innenbohrung 29 mit dem größten und der im Bereich der kleinsten Holmkraft angeordnete Hohlbolzen 27 die Innenbohrung 31 mit dem kleinsten Durchmesser auf. Auf diese Weise läßt sich eine gleichmäßige Kraftverteilung mit einer bei allen Hohlbolzen 25 bis 27 gleichen Tragfähigkeit erreichen. Denn beim Auftreten der von den Ständern 2, 3 aufzunehmenden Kräfte bewirken die unterschiedlichen Durchmesser der Innenbohrungen 29 bis 31 entsprechend unterschiedliche Ovalisierungen der Querschnitte der einzelnen Hohlbolzen, wodurch die Lastverteilung beeinflußt wird. Zudem entsteht wegen der geringen Kerbwirkung der Hohlbolzen 25 bis 27 eine sehr kompakte Verbindung.

## Patentansprüche

1. Gerüstständer, der aus mit den Ständerholmen (2a, 3a) verdübelten Rahmentraversen (4a, 5) besteht, insbesondere einer Richtmaschine (1) für Bleche, Bänder und Profile mit versetzt zueinander angeordneten oberen und unteren Richtwalzen (12, 15), die über ihre Länge mittels ihrerseits an Quertraversen (4, 5) abgestützten, in Walzenstühlen (6, 7) angeordneten Stützrollen (13, 17) abgestützt sind, wobei zumindest die obere Quertraverse (4) zur Positionierung der Richtwalzen (15) anstellbar ist,
**dadurch gekennzeichnet,**
daß die Rahmentraversen (4a; 5) und die Ständerholme (2a, 3a) durch Hohlbolzen (25, 26, 27) miteinander verdübelt sind.

2. Gerüstständer nach Anspruch 1,
**dadurch gekennzeichnet,**
daß in der Verbindungsfuge (24) zwischen den Rahmentraversen (4a; 5) und den Ständerholmen (2a, 3a) im Abstand übereinander mindestens zwei Hohlbolzen (25 bis 27) angeordnet und mit im Durchmesser unterschiedlich großen Innenbohrungen (29 bis 31) versehen sind.

3. Gerüstständer nach Anspruch 1 oder 2,
**gekennzeichnet durch**
drei übereinander angeordnete Hohlbolzen (25, 26, 27), von denen die Innenbohrung (29; 31) im Bereich der größten Holmkraft am größten und im Bereich der kleinsten Holmkraft am kleinsten ist.

4. Gerüstständer nach einem der Ansprüche 1 bis 3,
**gekennzeichnet durch**
von der Seite her in die Ständerholme (2a, 3a) und die Rahmentraversen (4a; 5) eingebrachte Schraubverbindungen (28).

5. Verfahren zur Herstellung der Dübellöcher in einem Gerüstständer nach den vorhergehenden Ansprüchen,
**gekennzeichnet durch**
gleichzeitiges Aufbohren der für die Hohlbolzen (25, 26, 27) in den Ständerholmen (2a, 3a) und den Rahmentraversen (4a; 5) benötigten Bohrungslöcher.

## Claims

1. Roll-stand housing, which consists of frame crossbeams (4a, 5) pin-connected with the housing posts (2a, 3a), especially a straightening machine (1) for sheets, strips and sections with upper and lower straightening rolls (12, 15) which are arranged offset relative to one another and supported over their length by means of support rolls (13, 17), which are arranged in roll chairs (6, 7) and supported in turn at cross members (4, 5), wherein at least the upper cross member (4) is adjustable for the positioning of the straightening rolls (15), characterised thereby that the frame crossbeams (4a; 5) and the housing posts (2a, 3a) are pin-connected together by hollow pins (25, 26, 27).

2. Roll-stand housing according to claim 1, characterised thereby that at least two hollow pins (25 to 27) are arranged in the connection gap (24) between the frame crossbeams (4a, 5) and the housing posts (2a, 3a) at a spacing one above the other and are provided with inner bores (29 to 31) differently dimensioned in diameter.

3. Roll-stand housing according to claim 1 or 2, characterised by three hollow pins (25, 26, 27) which are arranged one above the other and of which the inner bore (29; 31) is at the largest in the region of the largest post force and at the smallest in the region of the smallest post force.

4. Roll-stand housing according to one of claims 1 to 3, characterised by screw connections (28) formed from the side in the housing posts (2a, 3a) and the frame crossbeams (4a; 5).

5. Method for the production of pin apertures in a roll-stand housing according to the preceding claims, characterised by simultaneous drilling of the bore apertures needed for the hollow pins (25, 26, 27) in the housing posts (2a, 3a) and the frame crossbeams (4a; 5).

## Revendications

1. Bâti de cage qui consiste en des traverses (4a,5) chevillées aux montants de cage (2a,3a), notamment bâti de machine de dressage (1) de feuillards, bandes et profilés, comportant des cylindres de dressage (12,15) supérieurs et inférieurs décalés l'un par rapport à l'autre, qui prennent appui, sur leur longueur, sur des galets d'appui (13,17) logés dans des rateliers à galets (6,7) et prenant appui sur les traverses transversales (4,5), au moins la traverse transversale supérieure (4) étant réglable en vue du positionnement des cylindres de dressage (15), caractérisé en ce que les traverses (4A;5) et les montants (2a,3a) sont chevillés entre eux à l'aide de chevilles creuses (25,26,27).

2. Bâti de cage selon la revendication 1 caractérisé en ce qu'au moins deux chevilles creuses (25 à 27) sont agencées à distance l'une au-dessus de l'autre, dans le joint (24) qui relie les traverses (4a;5) et les montants (2a,3a), et sont munies d'alésages (29 à 31) de diamètres différents.

3. Bâti de cage selon la revendication 1 ou 2 caractérisé par trois chevilles creuses (25,26,27) agencées l'une au-dessus de l'autre, dont l'alésage intérieur (29;31) est le plus grand dans la zone où la force dans le montant est la plus grande, et dont l'alésage intérieur est le plus petit dans la zone où la force dans le montant est la plus petite.

4. Bâti selon l'une des revendications 1 à 3 caractérisé par des vis d'assemblage (28) introduites latéralement dans les montants (2a,3a) et les traverses (4a;5).

5. Procédé pour la fabrication des alésages pour chevilles dans un bâti de cage selon l'une des revendications précédentes, caractérisé par un forage simultané des trous nécessaires pour le logement des chevilles creuses (25,26, 27), dans les montants (2a,3a) et les traverses (4a;5).
